# EUROPÄISCHE PATENTSCHRIFT

(11) **EP 2 880 383 B1**
(45) Veröffentlichungstag und Bekanntmachung des Hinweises auf die Patenterteilung: **14.03.2018**
(21) Anmeldenummer: 13759422.2
(22) Anmeldetag: 31.07.2013
(51) Int. Cl.: F25D 3/00, F28D 20/02

(54) **KÜHLANLAGENANORDNUNG MIT KÄLTESPEICHERVORRICHTUNG**
COOLING SYSTEM ARRANGEMENT WITH COLD RESERVOIR DEVICE
ENSEMBLE D'INSTALLATION FRIGORIFIQUE AVEC DISPOSITIF D'ACCUMULATION DE FROID

(30) Priorität: 01.08.2012 DE 102012213542
(43) Veröffentlichungstag der Anmeldung: 10.06.2015
(73) Patentinhaber: Güdel Group AG, 4900 Langenthal (CH)
(72) Erfinder: GOSELING, Hubert, 97959 Assamstadt (DE)
(74) Vertreter: Keller & Partner Patentanwälte AG
(86) Internationale Anmeldenummer: PCT/DE2013/000418
(87) Internationale Veröffentlichungsnummer: WO 2014/019567

(56) Entgegenhaltungen:
- JP-A- 2010 230 275
- US-A- 4 103 510
- US-A- 4 545 213
- US-A1- 2007 175 236

## Beschreibung

Die Erfindung betrifft eine Kühlanlagenanordnung mit einer Kältemittelquelle, welche ein gekühltes flüssiges Kühlmittel bereit stellt.

Aus dem Stand der Technik sind verschiedenste Ausführungsformen von Kühlbehältern sowie hierzu gehörende Verschlussdeckel bekannt, welche eine gekühlte Lagerung und einen gekühlten Transport von insbesondere Lebensmitteln ermöglichen. Hierzu weisen die Kühlbehälter sowie die Verschlussdeckel eine Wärmedämmung auf, um unabhängig von der Temperaturdifferenz zwischen dem im Kühlbehälter vorhandenen Lagervolumen und der Umgebung die Lagertemperatur möglichst lange konstant, d.h. bei niedrigen Temperaturen, zu halten. Zu diesem Zwecke ist es weiterhin bekannt, in entsprechenden transportablen Kühlbehältern Kältespeichermittel einzubringen.

Bei den bekannten Kältespeichermitteln handelt es sich in aller Regel um Wasser oder ein anderes Medium, welches bei Raumtemperatur flüssig ist, sich jedoch bei Bedarf einfrieren lässt. Durch den Phasenübergang
zwischen dem gefrorenen Zustand und dem flüssigen Zustand kann eine große Kältespeicherwirkung erzielt werden. Das Kältespeichermittel wird aufgrund seines flüssigen Zustandes in üblicher Weise in vollständig Kühlelementen, wie beispielsweise Beuteln oder plattenförmige Behältnisse, welche auch als "Eutektische Platten" bekannt sind, gehalten. Diese Kühlelemente werden im Stand der Technik lose in den Verschlussdeckeln bzw. in den Kühlbehälter eingesetzt und allenfalls durch entsprechende Aufnahmen gegen ein Verrutschen gesichert.

Die US 2007/175236 A1 (Dryzun) offenbart einen tragbaren Kühlcontainer, der eine zerlegbare Wandung und eine thermisch isolierte Basis umfasst. Dabei wird der Kühlcontainer von einem thermisch isolierten Deckel verschlossen. Auf einer Unterseite des Deckels ist eine Kühlkörperanordnung angebracht. Diese umfasst eine Kühlplatte, die zwischen zwei eutektischen Platten mit Kühlkörperblöcken liegt. Die Kühlkörperanordnung umfasst zudem eine Verdampferschlange mit einem Ventilator.

Wenngleich mit den bekannten Ausführungsformen mit den Kühlelementen eine vorteilhafte gekühlte Lagerung bzw. ein gekühlter Transport von Lebensmitteln ermöglicht wird, so erfordert jedoch die Handhabung der Kühlboxen bzw. Verschlussdeckeln mit den separat darin eingefügten Kühlelementen einen großen Aufwand und führt insbesondere beim Bestreben einer Automatisierung zu einem erheblichen technischen Aufwand.

Weiterhin besteht Optimierungsbedarf hinsichtlich der Kühlspeicherleistung bei vorhandenem Bauraum.

Bei der Lagerung und dem Transport ist die Hygiene von hoher Relevanz, wobei die bisher übliche Handhabung der Kühlelemente eine immanente Gefahr der Verunreinigung birgt.

Aufgabe der vorliegenden Erfindung ist es daher, eine Kühlanlagenanordnung mit einer Kältespeichervorrichtung zur Verfügung zu stellen, welche in Art eines Verschlussdeckels oder in Art einer Kühlbox eine gekühlte Lagerung und einen gekühlten Transport ermöglicht, wobei die zuvor beschriebene Nachteile reduziert bzw. vermieden werden.

Die gestellte Aufgabe wird durch eine erfindungsgemäße Kühlanlagenanordnung unter Verwendung einer Kältespeichervorrichtung gemäß dem Anspruch 1 gelöst.

Aus der US 4,103,510 A ist ein mobiler Kühlbehälter zur Verwendung in einem Fahrzeug bekannt, wobei innerhalb des Kühlbehälters ein Kältespeichermittel und ein Wärmetauscher angeordnet ist. Dabei können Anschlüsse am Wärmetauscher über Schnellkupplungen mit einer externen Kühlmittelversorgung verbunden werden. Dabei wird der Kühlbehälters an die Kühlmittelleitung des Fahrzeugs angeschlossen.

Die JP 2010-230275 A offenbart einen mobilen Kühlmittelbehälter, wobei beidseitig an den Wänden Kältemittelspeicher angeordnet sind, welche wiederum von einem Wärmetauscher durchzogen sind. Zur Kälteeinspeisung kann der Kühlmittelbehälter mittels einer Verbindung an eine externen Kühlmittelversorgung angeschlossen werden.

Vorteilhafte Ausführungsformen sind Gegenstand der Unteransprüche. Die gattungsgemäße Kältespeichervorrichtung ist in der Art eines Verschlussdeckels zum Verschließen einer Öffnung eines transportablen ein Lagervolumen aufweisenden Kühlbehälters ausgeführt. Die Kältespeichervorrichtung verschließt das Lagervolumen, in welchem ein Lagergut gekühlt gelagert werden kann. Die Kältespeichervorrichtung soll insbesondere eine gekühlte Lagerung und einen gekühlten Transport von Lebensmitteln ermöglichen.

Die gekühlte Lagerung bzw. der gekühlte Transport führt naheliegend zu einem Kältespeicherbedarf, welcher gattungsgemäß durch die Verwendung eines Kältespeichermittels gelöst wird. Hierzu weist die Kältespeichervorrichtung einen Speicherraum auf, welcher von einer flüssigkeitsdichten Speicherwandung gebildet wird. Dieser Speicherraum ist zumindest teilweise mit einem bei Raumtemperatur flüssigen Kältespeichermittel gefüllt. Inwiefern der Speicherraum vollständig mit Kältespeichermittel gefüllt ist oder ein freies Restvolumen lediglich mit Luft oder einem sonstigen Gas gefüllt ist, wird sich insbesondere nach den Herstellungs- und Abfüllmöglichkeiten als auch ebenso nach den Eigenschaften des Kältespeichermittels und dessen thermischer Ausdehnung insbesondere beim Phasenübergang zwischen flüssig und fest richten. Entsprechend der Ausführungsart der Kältespeichervorrichtung wird folglich der Speicherraum mit dem Kältespeichermittel im Verschlussdeckel bzw. im Kühlbehälter angeordnet.

Weiterhin weist die gattungsgemäße Kältespeichervorrichtung eine Wärmedämmung auf, welche den Speicherraum auf der vom Lagerraum wegweisenden Seite überdeckt. Sowohl eine Ausführung der Kältespeichervorrichtung in Art eines Verschlussdeckels als auch in Art eines Kühlbehälters weist in aller Regel eine Wärmedämmung auf, welche unter gemeinsamer Betrachtung von zusammen gehörenden Verschlussdeckel und Kühlbehälter das Lagervolumen vollständig umgibt. Ebenso ist es denkbar, eine Kältespeichervorrichtung in Art eines Verschlussdeckels einzusetzen, welcher eine überdeckende Wärmedämmung aufweist, jedoch beim zugehörigen Kühlbehälter hingegen auf die Wärmedämmung verzichtet wird. Dieses kann bei geringen Temperaturunterschieden zur Umgebung oder bei kurzen Lagerdauern zulässig sein. Somit können vorteilhaft reguläre Standardboxen eingesetzt werden.

Relevant für die gattungsgemäße Kältespeichervorrichtung ist zumindest das Vorhandensein eines in einem geschlossenen Speicherraum eingeschlossenen bei Raumtemperatur flüssigen Kältespeichermittels.

Während im Stand der Technik die den Speicherraum realisierende Speicherwandung Bestandteil eines separaten Kühlelements ist, wird erfindungsgemäß nunmehr die Speicherwandung als fester Bestandteil der Kältespeichervorrichtung ausgeführt. D. h., dass der Speicherraum fest in der Kältespeichervorrichtung integriert ist und nicht bestimmungsgemäß entnommen werden kann. Hierbei ist es jedoch unerheblich, ob eine Montage und Demontage der Speicherwandung möglich ist. Hierdurch ist es zwar im Gegensatz zum Stand der Technik als auf den ersten Blick nachteilig nicht mehr möglich zur Kühlung bzw. dem Einfrieren des Kältespeichermittels den Speicherraum in Art eines Kühlelements der Kältespeichervorrichtung zu entnehmen.

Vielmehr ist es nunmehr erforderlich, die Kältespeichervorrichtung mit eingeschlossenem Kältespeichermittel einer Kühlung zuzuführen. Zu diesem Zwecke weist erfindungsgemäß die Kältespeichervorrichtung weiterhin einen Kühlmitteileinlass und einen Kühlmittelauslass auf. Diese sind verbunden mit einem im Speicherraum angeordneten von zumindest einem Kühlmittelkanal durchzogenen Wärmetauscher verbunden. Somit kann ein Kühlmittel vom Kühlmitteleinlass kommend durch den Wärmetauscher zum Kühlmittelauslass strömen. Durch Verwendung eines entsprechend gekühlten Kühlmittels kann mit der Durchströmung des Wärmetauschers dem Kältespeichermittel Wärme entzogen werden und/oder ein Einfrieren des Kältespeichermittels bewirkt werden.

Durch die erfindungsgemäße Ausführungsform wird die Kühlleistung der Kältespeichervorrichtung unter Berücksichtigung des Bauraums deutlich gegenüber den Ausführungen aus dem Stand der Technik verbessert. Durch die integrale Anordnung der Speicherwandung als fester Bestandteil der Kältespeichervorrichtung kann der vorhandene Bauraum besser ausgenutzt werden und es ist kein zusätzlicher Bauraum zum Einbringen bzw. Entnehmen eines Kühlelementes erforderlich sowie ebenso keine zusätzliche Öffnung zur Entnahme eines ansonsten notwendigen Kühlelements oder Aufnahmen zur Fixierung eines Kühlelements vorhanden sind.

Weiterhin wird durch die erfindungsgemäße Ausführungsform eine Integration in einer automatischen Anlage verbessert, als dass eine automatisierte Kühlung des Kältespeichermittels realisiert werden kann, wohingegen beim Stand der Technik ein Handlingssystem eine Entnahme der Kühlelemente bewirken und diese wiederum kühlen muss.

Mit einem Entfall einer Entnahme und eines Einbringen eines Kühlelements in die Kältespeichervorrichtung wird eine verbesserte Hygiene erreicht. Während im Stand der Technik die separaten Kühlelemente im Handling schnell verunreinigt werden können, kann diese Problematik aufgrund der festen Integration in die Kältespeichervorrichtung gar nicht erst zu Tage treten.

Besonders vorteilhaft ist es hierbei, wenn das Kältespeichermittel Wasser und/oder ein wässriges Fluid und/oder ein Eutektikum ist. In Abhängigkeit von der geforderten Kühltemperatur bzw. Lagertemperatur der aufzubewahrenden Lebensmittel oder sonstiger Güter kann das Kältespeichermittel vorteilhaft an den Verwendungszweck ausgerichtet werden. Insbesondere im Übergang zwischen der flüssigen Phase und der festen Phase kann eine große Kältespeicherkapazität erzielt werden.

Hierbei wird das Kältespeichermittel vorteilhaft anhand dessen Erstarrungspunkt und dem Verwendungszweck, d.h. der gewünschten Lagertemperatur ausgewählt. Naheliegend ermöglicht somit ein Kältespeichermittel aus Wasser eine vorteilhafte Lagerung bei Temperaturen nahe 0 °C (immer in Abhängigkeit von der Wärmedämmung von Verschlussdeckel und Kühlbox sowie den vorherrschenden Temperaturen) und eignet somit insbesondere zur Lagerung von leicht verderblichen, nicht gefrorenen Lebensmitteln. Bei einem wässrigen Fluid kann es sich beispielsweise um eine Salzsole handeln, welche einen niedrigeren Erstarrungspunkt aufweist und somit Lagertemperaturen von unter 0 °C sichern kann. Mit einem Eutektikum ist es ebenso möglich abweichende Erstarrungspunkte sowohl im Bereich oberhalb 0 °C als auch im Bereich unterhalb 0 °C zu festzulegen um entsprechende Lagertemperaturen zu erzielen.

Zur Ermöglichung einer Kühlmittelströmung vom Kühlmitteleinlass zum Kühlmittelauslass werden diese besonders vorteilhaft in Art einer Schnellverschlusskupplung ausgeführt. D. h. zur Verbindung des Kühlmitteleinlasses bzw. Kühlmittelauslasses mit einem entsprechenden Gegenstück, d.h. einem Einlassanschluss bzw. einem Auslassanschluss, bedarf es lediglich eines Zusammensteckens bzw. Auseinanderziehens zur Herstellung der leitenden Verbindung bzw. zum Lösen der Verbindung. Hierbei sind zwei verschiedene Aspekte je nach Anwendung und Umweltbedingungen zu beachten, welches die Dichtigkeit am Kühlmitteleinlass und Kühlmittelauslass betrifft.

Einerseits ist bei einer Durchströmung mit einem Kühlmittel, d.h. dem Anschluss von Kühlmitteleinlass und Kühlmittelauslass an entsprechende Gegenelemente ein Kühlmittelverlust zu verhindern. Dieses kann dadurch realisiert sein, dass durch ein Zusammenstecken bereits eine hinreichende Dichtwirkung erzielt wird. Ein vorteilhaftes Dichtelement wird hierzu beispielsweise am Gegenelement angebracht, so dass Kühlmitteleinlass und Kühlmittelauslass ohne besondere Maßnahmen ausgeführt werden können.

Andererseits ist für die übrige Zeit für den Zustand ohne Anschluss an ein Gegenstück, d.h. die Dauer der Lagerung und des Transports, vorteilhaft zu beachten, dass kein Staub in den Kühlmittelkanal im Wärmetauscher gelangt sowie kein in der Kältespeichervorrichtung verbliebenes Kühlmittel austritt. Hierzu kann vorteilhaft ein verstellbarer Verschluss oder eine abnehmbare Kappe angebracht sein. Besonders vorteilhaft ist die Verwendung eines den Kühlmitteleinlass bzw. Kühlmittelauslass verschließenden Schließelements, welches von einer Federkraft in einer Schließstellung gehalten wird und vom Gegenstück oder dem Druck im Kühlmittel automatisch weggedrückt wird, so dass ein Kühlmittelstrom ermöglicht wird.

Unabhängig hiervon können beim Kühlmitteleinlass als auch beim Kühlmittelauslass Ventile vorgesehen sein, welche die leitende Verbindung unterbinden können. Diese können in besonders vorteilhafter Weise dahingehend ausgeführt werden, dass sich diese Ventile selbstständig beim Kontakt mit einem Einlassanschluss bzw. Auslassanschluss öffnen. Ebenso kann es vorgesehen sein, dass Staubkappen oder dergleichen auf dem Kühlmitteleinlass oder dem Kühlmittelauslass vorgesehen sind, welche händisch automatisiert oder automatisch selbsttätig zur Herstellung der Verbindung zwischen einem Einlassanschluss und Kühlmitteleinlass sowie Auslassanschluss und Kühlmittelauslass öffnen.

Hierzu ist es besonders vorteilhaft, wenn der Kühlmitteleinlass und der Kühlmittelauslass an einer schmalen Stirnseite eines flachen rechteckigen Verschlussdeckels angeordnet sind. Einerseits ist hierbei eine vorteilhafte Zugänglichkeit sowohl bei der separaten Kältespeichervorrichtung in Art eines Verschlussdeckels gegeben als auch ebenso die Zugänglichkeit bei Aufliegen des Verschlussdeckels auf einer Kühlbox gewährleistet ist. Darüber hinaus kann bei dieser Anordnung von Kühlmitteleinlass und Kühlmittelauslass der vorhandene Bauraum des flachen Verschlussdeckels vorteilhaft genutzt werden als auch ebenso eine Integration in einer automatisierten Anlage vorteilhaft ausgeführt werden kann.

In welcher Art der Wärmetauscher ausgeführt wird ist zunächst unerheblich, sofern entsprechende Kühlmittelströmung durch den Wärmetauscher unter Kühlung des Kältespeichermittels ermöglicht ist. Besonders vorteilhaft ist es jedoch, wenn der Wärmetauscher zumindest eine Wärmetauscherlamelle mit einer plattenförmige Gestalt aufweist. Insbesondere unter Berücksichtigung des Phasenübergangs zwischen flüssig und fest und möglicher Ausdehnungen des Kältespeichermittels ist die plattenförmige Gestalt vorteilhaft hinsichtlich der Verhinderung einer Deformierung des Wärmetauschers bzw. der Wärmetauscherlamelle. Hierzu weist weiterhin besonders vorteilhaft der Wärmetauscher mehrerer derartige plattenförmige Wärmetauscherlamellen auf, welche im Wesentlichen parallel zueinander angeordnet sind.

Bei Ausführung in Form eines flachen rechteckigen Verschlussdeckels werden weiterhin in vorteilhafter Weise die Wärmetauscherlamellen senkrecht zur Erstreckung dieses Verschlussdeckels angeordnet. Somit wird zum einen eine vorteilhafte Übertragungsoberfläche zur Kühlung des Kältespeichermittels erzielt als auch ebenso bei Ausdehnung des Kältespeichermittels beim Einfrieren einer Beschädigung des Wärmetauschers verhindert werden kann.

Weiterhin ist es besonders vorteilhaft, wenn die Kältespeichervorrichtung zumindest einen Temperatursensor aufweist, der den Zustand des Kältespeichermittels überwachen kann. Diesbezüglich kann im einfachsten Fall die Überwachung auf eine Zustandsänderung des Kältespeichermittels von flüssig auf fest beschränkt sein. Insofern ist lediglich feststellbar, ob das Kältespeichermittel flüssig oder fest vorliegt, wobei der gemessene Zustand im Gegensatz zum tatsächlichen Zustand des Kältespeichermittels von Ausführung und Anordnung des Temperatursensors abhängig sein kann. Dieses könnte insofern beispielsweise ein Drucksensor sein, welcher eine mögliche Ausdehnung des Kältespeichermittels beim Einfrieren erfasst. Vorteilhaft ist jedoch der Einsatz eines regulären Temperatursensors, welcher die Temperatur in °C ermitteln kann.

Weiterhin weist besonders vorteilhaft die Kältespeichervorrichtung einen Temperatursensor zur Messung der Lufttemperatur auf der zum Lagervolumen weisenden Seite der Kältespeichervorrichtung auf. Ebenso ist es möglich, die Wandtemperatur der Kältespeichervorrichtung auf der zum Lagervolumen weisenden Seite zu erfassen. Durch Messung dieser Wandtemperatur bzw. Lufttemperatur kann auf die Temperatur im Lagervolumen geschlossen werden und somit festgestellt werden, ob die gewünschte Lagertemperatur oder eine unzulässige Temperatur vorhanden ist.

Besonders vorteilhaft ist es hierbei, wenn der Messwert des Temperatursensors bzw. die Messwerte der Temperatursensoren im Falle mehrerer Temperatursensoren drahtlos an einen externen Empfänger übertragen werden können. Somit ist es nicht erforderlich, bei der Kältespeichervorrichtung vor Ort die Temperaturmesswerte ablesen zu müssen oder einen Kabelverbindung herstellen zu müssen. Vielmehr kann von einem externen Ort eine Überwachung der Temperaturen der Kältespeichervorrichtung erfolgen. Somit wird in besonderer Weise bei beispielsweise einem automatisierten System eine Zustandsüberwachung der Kältespeichervorrichtung ermöglicht, wobei die vorhandenen Lagertemperaturen erfasst werden.

Zur Verbesserung des Kühlverhaltens der Kältespeichervorrichtung weist die Kältespeichervorrichtung in Art eines Kühlbehälters oder ein zum Verschlussdeckel gehörender Kühlbehälter zumindest abschnittsweise auf der zum Lagervolumen weisenden Seite eine unebene Gestalt auf. Diese unebene Gestalt ist hierbei mit Erhöhungen und Vertiefungen versehen, welche sich insbesondere an den Seitenwänden in senkrechter Richtung erstrecken. Durch diese Erhöhungen und Vertiefungen, d.h. die unebene Gestalt, wird eine Kaltluftzirkulation im Lagervolumen begünstigt und somit eine gleichmäßigere Lagertemperatur erreicht, als dieses im Fall planarer Innenwände der Fall wäre.

Bei einer Kältespeichervorrichtung in Art eines Verschlussdeckels weist dieser auf der zum Lagervolumen weisenden Seite eine konkave bzw. eine Mittig vom Lagervolumen wegweisende Wölbung auf. Durch die gewölbte Formgebung wird eine Kaltluftzirkulation dahingehend verbessert, dass die sich an der Kältespeichervorrichtung abkühlende Luft im Lagervolumen an der Wölbung nach außen herab und somit zu den Seitenwänden des Kühlbehälters geführt wird.

Zur Ermöglichung einer automatischen Lagerhaltung ist es besonders vorteilhaft, wenn die Kältespeichervorrichtung in Art eines Verschlussdeckels unter Berücksichtigung der zugehörigen Kühlbehälter bzw. der Kältespeichervorrichtung in der Art eines Kühlbehälters unter Berücksichtigung eines zugehörigen Verschlussdeckels kompatibel zu einer sogenannten Eurobox ausgeführt ist. Die Kompatibilität hat hierbei sowohl die Lagerung als auch den Transport zu berücksichtigen, so dass bekannte Anlagentechniken zur Lagerung und zum Transports von Euroboxen eingesetzt werden können, ohne dass es hierzu einer besonderen Anpassung bedarf.

Diesbezüglich ist es besonders vorteilhaft, wenn die Kältespeichervorrichtung unter Berücksichtigung des Kühlbehälters als auch des zugehörigen Verschlussdeckels in einer ersten Ausführung eine Grundabmessung von 40x30 cm mit einer Höhe zwischen 20 cm und 35 cm oder in einer zweiten Ausführung eine Grundabmessung von 60x40 cm mit einer Höhe zwischen 20 cm und 45 cm oder in einer dritten Ausführung eine Grundabmessung von 80x60 cm mit einer Höhe zwischen 30 cm und 45 cm aufweist. Somit ist es möglich, vorhandene Lagerungssysteme zur Lagerung von Euroboxen und dessen Transport einzusetzen und hierbei eine gekühlte Lagerung und den gekühlten Transport zu ermöglichen ohne dass es hinsichtlich der Lagerung und des Transports besonderer Maßnahmen bedarf. Die erfindungsgemässe Kühlanlagenanordnung weist eine Kältemittelquelle auf, wobei deren Art zunächst unerheblich ist. Insofern kann es sich im einfachsten Fall um einen Anschluss an eine externe Kühlmaschine handeln, welche beispielsweise zentral für verschiedene Anlagen Kühlmittel bereit stellt. Ebenso kann jedoch eine Kühlmaschine zur Erzeugung des Kühlmittels Umfang der Kühlanlagenanordnung sein und die Kühlmittelquelle bilden. Das Kühlmittel wird hierbei von der Kühlmittelquelle als gekühltes flüssiges Kühlmittel bereitgestellt um entsprechende Kühlmittelströmung sowie einen Kühlen des Kältespeichermittels realisieren zu können.

Der Kühlmittelstrom im Wärmetauscher der Kältespeichervorrichtung wird hierbei mittels mehrerer Kühlladestation ermöglicht. Hierbei weist die Kühlladestation ein zum Kühlmitteleinlass komplementären Einlassanschluss sowie einen zum Kühlmittelauslass komplementären Auslassanschluss auf. Die Kältespeichervorrichtung kann derart in der Kühlladestation aufgenommen werden, dass eine leitende Verbindung vom Einlassanschluss zum Kühlmitteleinlass sowie vom Auslassanschluss zum Kühlmittelauslass hergestellt werden kann, wodurch Kühlmittel die Kältespeichervorrichtung, d. h. deren Wärmetauscher, durchfließen kann.

Durch die erfindungsgemäße Kühlanlagenanordnung mit einer Kältespeichervorrichtung, welche in einer Kühlladestation gekühlt werden kann, wird eine automatisierte gekühlte Lagerung sowie ein gekühlter Transport von insbesondere Lebensmitteln ermöglicht. Durch eine vorteilhafte Anlagentechnik kann die Kühlung der Kältespeichervorrichtung vollautomatisch erfolgen, so dass kein händischer Eingriff erforderlich ist. Somit wird eine optimale Einbindung in ein Logistiksystem ermöglicht und insbesondere eine gekühlte Lagerung ermöglicht, ohne dass es hier zu einer manuellen Handhabung von Kühlelementen oder dergleichen bedarf.

Hierbei ist es besonders vorteilhaft, wenn das Kühlmittel eine Sole, insbesondere eine Salzsole ist. Durch Verwendung einer Sole können variable Kühltemperaturen realisiert werden, welche hierbei ebenso bis deutlich unter dem Gefrierpunkt des Wassers liegen können. Somit kann der Kühlmittelstrom auch bei tiefen Temperaturen realisiert werden. Hierdurch kann die Wahl des vorteilhaften Kältespeichermittels voranging am Lagergut ausgerichtet werden. Die Verwendung einer Salzsole ist weiterhin dahingehend vorteilhaft, dass eine Leckage (wenngleich hierbei eventuell eine höhere Korrosionsgefahr besteht) hinsichtlich der Lagerung von Lebensmitteln unbedenklich ist.

Insbesondere bei der vorgesehenen Durchströmung der Kältespeichervorrichtung mit dem Kühlmittel und der folglich erforderlichen wiederholten Herstellung einer Verbindung und dem Trennen der Verbindung des Einlassanschlusses mit dem Kühlmitteleinlass und des Auslassanschlusses mit dem Kühlmittelauslass sind geringfügige Leckagemengen nicht auszuschließen, jedoch bei Verwendung einer Salzsole weitestgehend unbedenklich.

Weiterhin ist es besonders vorteilhaft, wenn die Kältespeichervorrichtung zur Durchströmung mit dem Kühlmittel in der Kühlladestation schubladenartig eingefahren und darin abgelegt werden kann. Dieses ist insbesondere von besonderem Vorteil bei Ausführung der Kältespeichervorrichtung in Art eines flachen rechteckigen Verschlussdeckels, so dass die Kühlladestation vorteilhaft kastenartig mit geringem Platzbedarf die Kältespeichervorrichtung umgebend gestaltet werden kann.

Hierbei kann sowohl vorgesehen sein, dass die Kältespeichervorrichtung zunächst auf einer ausfahrbaren Ablageeinrichtung abgelegt wird und sodann ein schubladenartiges Einfahren der Ablageeinrichtung in die Kühlladestation erfolgt. Ebenso kann vorgesehen sein, dass in der Kühlladestation Ablageschienen oder dergleichen vorhanden sind, auf welchen die Kältespeichervorrichtung während des Einfahrens zugleich abgelegt werden kann. Weiterhin ist es denkbar, dass beispielsweise die Kältespeichervorrichtung mittels einer Handhabungsvorrichtung zunächst vollständig in die Kühlladestation eingefahren wird um sodann nachfolgend darin abgelegt zu werden.

Hierbei ist es besonders vorteilhaft, wenn zugleich mit dem Einfahren eine Kühlmittel führende Verbindung zwischen dem Einlassanschluss und dem Kühlmitteleinlass sowie zwischen dem Auslassanschluss und dem Kühlmittelauslass hergestellt wird. D. h. durch das schubladenartige Einfahren bzw. Einschieben der Kältespeichervorrichtung in die Kühlladestation wird sogleich zumindest zum Abschluss der Bewegung die leitende Verbindung hergestellt. Somit bedarf es keiner zusätzlichen Maßnahmen zur Herstellung der leitenden Kühlmittelverbindung. Insbesondere in Verbindung mit der Ausführung des Kühlmitteleinlasses sowie Kühlmittelauslasses in Art einer Schnellverschlusskupplung kann somit mit dem Einschieben sogleich die Verbindung hergestellt werden.

Sofern die endgültige Ablage in der Kühlladestation erst nach dem Einfahren der Kältespeichervorrichtung in die Kühlladestation erfolgt, ist allenfalls zu berücksichtigen, dass der Einlassanschluss sowie der Auslassanschluss die notwendige Flexibilität bzw. Beweglichkeit aufweisen um eine entsprechende Ablagebewegung der Kältespeichervorrichtung in der Kühlladestation bei bereits hergestellter leitender Verbindung zu ermöglichen.

In einer vorteilhaften Ausführungsform umfasst die Kühlladestation eine aus- und einfahrbare Ablageeinrichtung zur Aufnahme der Kältespeichervorrichtung. D.h., dass auf die ausgefahrene Ablageeinrichtung die Kältespeichervorrichtung abgelegt werden kann, wobei sodann ein Einfahren in die Kühlladestation von sowohl der Ablageeinrichtung als auch der darauf aufliegender Kältespeichervorrichtung erfolgen kann.

Wie die Ablageeinrichtung hierbei ein- und ausgefahren wird ist zunächst unerheblich. Dieses kann insofern beispielsweise händisch oder mit einer sonstigen Handhabungsvorrichtung erfolgen. Besonders vorteilhaft ist es jedoch, einen zur Kühlladestation gehörenden Schubladenantrieb einzusetzen. Dieses kann hierbei besonders vorteilhaft ein Hydraulik- oder Pneumatikzylinder sein. Durch Verwendung entsprechenden Schubladenantriebs wird es ebenso besonders vorteilhaft ermöglicht, die Dichtigkeit und den vollständigen Verschluss des Einlassanschlusses mit dem Kühlmitteleinlass sowie des Auslassanschlusses des Kühlmittelauslass zu gewährleisten. Ebenso vereinfacht die Ausführungsform mit Ablageeinrichtung und Schubladenantrieb die Aufnahme der Kältespeichervorrichtung in die Kühlladestation.

Weiterhin ist es besonders vorteilhaft, wenn die Kühlladestation zumindest ein Arretierungsmittel umfasst, welches die Kältespeichervorrichtung in der Kühlladestation sichert. Diese Sicherung hat hierbei die Aufgabe, einen Kältemittelverlust zwischen dem Einlassanschluss und dem Kühlmitteleinlass sowie zwischen dem Auslassanschluss und dem Kühlmittelauslass zu verhindern. Aufgrund eines Stroms vom flüssigen Kühlmittel vom Einlassanschluss in den Kühlmitteleinlass und vom Kühlmittelauslass in den Auslassanschluss bei entsprechendem Druck und Fließgeschwindigkeit ist eine Leckage nach Möglichkeit zu verhindern. Hierzu sichert das Arretierungsmittel ein Lösen entsprechender Verbindung. Um welche Art von Arretierungsmittel es sich hierbei handelt ist hierbei zunächst unerheblich.

In einer ersten Ausführungsvariante wird das Arretierungsmittel von einem vorteilhaften Schubladenantrieb realisiert. D. h., dass der Schubladenantrieb selber bereits ein Bewegen der Kältespeichervorrichtung in der Kühlladestation aus der Endposition verhindert. Ebenso kann das Arretierungsmittel dadurch gebildet sein, dass ein verstellbarer Bolzen oder sonstiges verstellbares Arretierungsmittel nach vollständigem Einfahren der Kältespeichervorrichtung in der Kühlladestation ein Entfernen der Kältespeichervorrichtung verhindert. Hierbei kann der Angriff des Arretierungsmittels sowohl am zum Kühlmitteleinlass wie Kühlmittelauslass gegenüberliegendem Ende der Kältespeichervorrichtung erfolgen als auch ebenso an gleicher Seite angeordnet sei, indem beispielsweise an einem umlaufenden Rand der Kältespeichervorrichtung eine entsprechende komplementäre Arretierungsmöglichkeit angeboten wird. Im Falle eines vorherigen Einfahrens der Kältespeichervorrichtung in die Kühlladestation mit nachfolgendem Ablegen in der Kühlladestation ist es ebenso möglich, als Arretierungsmittel ein feststehendes Element vorzusehen, über welches die Kältespeichervorrichtung beim Einfahren hinweg gehoben wird und beim Ablegen anstößt.

Weiterhin ist es vorteilhaft, zur staubgeschützten Lagerung der Kältespeichervorrichtung in der Kühlladestation, insbesondere für eine wärmegedämmte Lagerung, wenn die Kühlladestation zumindest eine vordere Ladeklappe umfasst. Hierbei wird die Ladeklappe zum Beladen mit der Kältespeichervorrichtung geöffnet und sodann nach der Aufnahme der Kältespeichervorrichtung wieder geschlossen. Hierbei kann die Ladeklappe sowohl mit einer schubladenartigen Ablageeinrichtung verbunden sein als auch ebenso ein separates Teil sein, welches zum Be- und Entladen der Kältespeichervorrichtung bewegt wird.

Weiterhin umfasst die vorteilhafte Kühlanlagenanordnung eine Ventilanordnung. Diese Ventilanordnung ermöglicht hierbei den entsprechenden Kühlmittelstrom zur Kühlung des Kältespeichermittels in der Kältespeichervorrichtung. Hierzu ist die Ventilanordnung mit einer Kühlmittelquelle verbunden sowie mit dem Einlassanschluss und dem Auslassanschluss der Kühlladestation. Weiterhin besteht eine Verbindung von der Ventilanordnung zu einer Druckluftversorgung. Die besonders vorteilhafte Schaltung der Ventilanordnung ermöglicht hierbei eine Kühlmittel führende Verbindung von der Kühlmittelquelle zum Einlassanschluss und somit folgend durch den Kühlkanal des Wärmetauschers der Kältespeichervorrichtung zur Kühlung des entsprechenden Kältespeichermittels.

Bei abgeschlossener Kühlung des Kältespeichermittels wird in besonderer Weise von der Ventilanordnung die Kühlmittel führende Verbindung von der Kühlmittelquelle zum Einlassanschluss unterbunden, wobei sodann eine leitende Verbindung von der Druckluftversorgung zum Einlassanschluss hergestellt werden kann. Durch diese vorteilhafte Ausführungsform der Ventilanordnung und dessen Schaltungsweise kann somit nachfolgend dem Kühlmittel Druckluft durch den Wärmetauscher geführt werden. Somit kann ein Austreiben des Kühlmittels durch die nachströmende Druckluft erfolgen.

Durch diese besondere Ausführungsform der Ventilanordnung und dessen Schaltungsmöglichkeiten wird es ermöglicht, die Kältespeichervorrichtungen im Wesentlichen frei von Kühlmittel für die reguläre Nutzungsdauer zur Lagerung und zum Transport zu verwenden. Ein weiterer Verlust von Kühlmittel wird somit weitestgehend unterbunden, ohne dass es zusätzlicher Ventiltechniken oder Verschlüsse bei der Kältespeichervorrichtung bedarf.

Die besondere Ausführungsform der Kühlanlagenanordnung umfasst weiterhin eine Handlingsvorrichtung mittels der eine Kältespeichervorrichtung der Kühlladestation übergeben werden kann. Hierbei kann die Handlingsvorrichtung die Kältespeichervorrichtung entweder von einem ebenso automatisierten Transportsystem übernehmen oder von einer bestimmten Übergabestation. Zumindest ist die Handlingsvorrichtung dahingehend ausgeführt, dass das Einfahren und Ablegen in der Kühlladestation gewährleistet ist. Je nach Automatisierungsgrad der Kühlladestation ist insofern die Handlingsvorrichtung dahingehend auszuführen, dass diese ebenso die Kältespeichervorrichtung in die Kühlladestation einfährt und darin ablegt oder wahlweise auf einer ausgefahrenen Ablageeinrichtung ablegen kann, wobei sodann von der Kühlladestation selbsttätig von dessen integrierten Schubladenantrieb die Ablageeinrichtung mit Kältespeichervorrichtung eingezogen wird. Die Gestaltung sowohl der Kühlladestation als auch der Handlingsvorrichtung hinsichtlich der Aufteilung der Automatisierung wird sich hierbei insbesondere nach dem Durchsatz sowie dem Anlagenumfang richten.

Hierbei weist die besondere Kühlanlagenanordnung eine Mehrzahl von nebeneinander und übereinander angeordneten Kühlladestationen auf. Somit kann beispielsweise bei einer kleineren Anlage ein größerer Aufwand hinsichtlich der Ausführung der Kühlladestation betrieben werden und somit werden diese vorzugsweise mit einem Schubladenantrieb ausgerüstet, während hingegen bei einer großen Anzahl von Kühlladestationen diese lediglich regalartig ausgeführt werden, wobei hingegen die Handlingsvorrichtung ein Einfahren als auch ein Ablegen in die Kühlladestation realisieren kann.

In besonderer Weise umfasst die Kühlanlagenanordnung weiterhin ein Temperaturüberwachungssystem, welches die gemessenen Temperaturdaten von in Verwendung befindlichen Kältespeichervorrichtungen empfängt und auswertet. Durch dieses Temperaturüberwachungssystem wird es ermöglicht, dass bei einem Unterschreiten einer allgemeinen und/oder für den Lagerungszweck individuellen Grenztemperatur ein Austausch der erwärmten Kältespeichervorrichtung gegen eine gekühlte Speichervorrichtung erfolgt. Somit kann sichergestellt werden, dass entsprechend dem Lagerungszweck in jedem Falle eine hinreichende Kühlung vorhanden ist und keine Gefahr besteht, dass eine unzulässig hohe Temperatur in einem Lagervolumen vorhanden ist.

Hierzu weist die besonders vorteilhafte Kühlanlagenanordnung ein automatisch gesteuertes Transportsystem auf, welches den Austausch von Kältespeichervorrichtungen realisieren kann. Dieses kann hierbei auf zweierlei Art erfolgen, wobei diese sich nicht gegenseitig ausschließen müssen, sondern ebenso parallel bzw. alternativ eingesetzt werden können.

In einer ersten Ausführungsvariante wird hierzu eine Kühlbox mit erwärmter Kältespeichervorrichtung in Art eines Verschlussdeckels vom Lagerort zu den Kühlladestationen verbracht. Durch das bei der Kühlladestation vorhandene Handlingssystem wird die erwärmte Kältespeichervorrichtung entnommen und gegen eine gekühlte Kältespeichervorrichtung ausgetauscht. Nachfolgend erfolgt der Rücktransport der Kühlbox mit gekühlter Kältespeichervorrichtung zum Lagerort bzw. zu einem neuen Lagerort. D. h. in diesem Falle erfolgt der Austausch der Kältespeichervorrichtung am Ort der Kühlung der Kältespeichervorrichtungen unter Transport der gesamten Kühlbox nebst dessen Inhalt hin und zurück.

In einer zweiten Variante erfolgt hingegen ein Transport einer gekühlten Kältespeichervorrichtung von den Kühlladestationen zum Lagerort der erwärmten Kältespeichervorrichtung wobei sodann ein Austausch am bzw. beim Lagerort erfolgen kann. Nach Tausch der erwärmten Kältespeichervorrichtung durch die herbeigebrachte gekühlte Kältespeichervorrichtung kann sodann die erwärmte Kältespeichervorrichtung wieder zu den Kühlladestationen transportiert werden, um diese wiederum zu kühlen. Hierzu wird in besonders vorteilhafter Weise die Kühlbox aus seiner Stellfläche im Lagerregal oder dergleichen entnommen und ohne weiteren Transport erfolgt der Austausch der Kältespeichervorrichtungen, wobei die Kühlbox umgehend nebst Inhalt und neuer gekühlter Kältespeichervorrichtung wieder auf ihren Stellplatz zurückgestellt werden kann.

Zur Verhinderung eines Kälteverlustes für den Transportweg von den Kühlladestationen zum jeweiligen Lagerort weist hierbei das Transportsystem vorteilhafte wärmegedämmte Deckelaufnahmen zur Aufnahme entsprechender Kältespeichervorrichtungen auf.

Besonders vorteilhaft an dieser erfindungsgemäßen Ausführungsform eine Kältespeichervorrichtung sowie einer Kühlanlagenanordnung ist es, dass sowohl eine modulare als auch flexibel erweiterbare Ausführung gegeben ist. D. h. je nach Anwendungsfall kann die Anzahl sowohl der Kältespeichervorrichtungen, als auch die Anzahl der Kühlboxen sowie die Anzahl der erforderlichen Kühlladestationen erhöht werden. Somit kann eine individuelle Anpassung an die jeweils erforderlichen Kühlleistungen bzw. dem erforderlichen Kühlvolumen geschaffen werden. Zugleich besteht somit die Möglichkeit, die Kältespeichervorrichtung ebenso für einen Transport von beispielsweise Lebensmitteln zum Endverbraucher einzusetzen, wobei dort über eine weitere Kühlladestation ein erneutes Kühlen der Kältespeichervorrichtung ermöglicht wird. Somit kann bei vorhandener Kühlanlagenanordnung beim Lieferanten als auch beim Abnehmer eine geschlossene Kühlkette unter Einsatz entsprechender Kältespeichervorrichtung erreicht werden, wobei sich die notwendige Anlagentechnik auf das jeweils erforderliche Minimum beschränken lässt.

In besonders vorteilhafter Ausführung wird eine Kältespeichervorrichtung der zuvor beschriebenen Art für unterschiedliche Verwendungszwecke eingesetzt. Dieses ist hierbei zum einen die Verwendung als Verschlussdeckel einer Kühlbox. Jedoch kann die gleiche Kältespeichervorrichtung ebenso Verwendung finden bei einer Kühleinrichtung in Art eines Kühlschranks, d.h. einer Kühlbox mit einer vorderen Verschlusstür. Hierbei wird die Kältespeichervorrichtung in gleicher Weise wie bei der Kühlbox von oben auf den oben offenen Kühlschrank aufgelegt. Zur Kühlung des Kühlschrankinhalts bedarf es somit keinerlei Kühltechniken beim Kühlschrank, d.h. der Stromanschluss kann (muss aber nicht) ersatzlos entfallen. Die Kühlung wird hierbei vielmehr von der Kältespeichervorrichtung ermöglicht.

In vorteilhafter Ausführung wird die Kältespeichervorrichtung als Verschlussdeckel bei einem Kühlschrank in zuvor beschriebener Art ausgeführt und in zuvor beschriebener Weise in einer Kühlladestation gekühlt. Besonders vorteilhaft ist es jedoch, wenn ergänzend zur Kühlladestation eine Zusatzkühlung dergestalt bereit gestellt wird, mit der eine auf einer Kühlbox oder auf einem Kühlschrank liegende Kältespeichervorrichtung gekühlt werden kann. Hierzu bedarf es lediglich der zur Kühlanlagenanordnung vergleichbaren Installation, wobei jedoch anstelle der Kühlladestation zwei flexibel thermisch isolierte Schlauchverbindungen zu einem Einlassanschluss bzw. einem Auslassanschluss eingesetzt werden.

Besonders vorteilhaft ist die Ausführung des Kühlschranks mit unterseitigen Rollen. Somit wird es möglich, den Kühlschrank mit Kältespeichervorrichtung je nach Bedarf an unterschiedlichen Orten einzusetzen, bzw. einen rollenden Transport direkt im Kühlschrank in Art eines gekühlten Servicewagens zu ermöglichen.

Weiterhin vorteilhaft ist die Ergänzung um eine mobile Zusatzkühlung. Diese ermöglicht die an die jeweiligen Situationen angepasste Kühlung der Kältespeichervorrichtung beispielsweise für Festveranstaltungen oder dergleichen. Hierbei können beispielsweise zwei Kältespeichervorrichtungen für eine Kühlbox oder einen Kühlschrank bereitgehalten werden, wobei sich einer im Einsatz zur Kühlung von Lebensmitteln befindet und der andere an der Zusatzkühlung angeschlossen ist.

Somit kann vorteilhaft sowohl im Falle der Verwendung der Kältespeichervorrichtung bei einem Kühlbehälter als auch bei einem Kühlschrank bei Anstiegen der Temperatur der Kältespeichervorrichtung bzw. einem Ansteigen der Temperatur im Lagervolumen ein Austausch der Kältespeichervorrichtung durch eine bereits gekühlte Kältespeichervorrichtung realisiert werden. Hierzu bedarf es lediglich eines Verbringens der in der Kühlladestation bzw. an der Zusatzkühlung gekühlten Kältespeichervorrichtung zum Kühlbehälter bzw. zum Kühlschrank, wobei dort die bereits erwärmte Kältespeichervorrichtung gegen die herbeigeschaffte gekühlte Kältespeichervorrichtung ausgetauscht wird. Anschließend wird die erwärmte Kältespeichervorrichtung zurück zur Kühlladestation bzw. zur Zusatzkühlung verbracht, um sodann wiederum gekühlt zu werden.

In den nachfolgenden Figuren wird eine beispielhafte Kältespeichervorrichtung in Art eines Verschlussdeckels, eine zugehörige Kühlbox, sowie eine Kühlanlagenanordnung in beispielhafter Ausführung skizziert.

Es zeigen:
- Fig. 1: eine Kältespeichervorrichtung in Art eines flachen rechteckigen Verschlussdeckels;
- Fig. 2: ein Schnitt durch die Kältespeichervorrichtung gemäß Fig. 1;
- Fig. 3: einen Wärmetauscher zur Ausführung aus Fig. 1;
- Fig. 4: eine zur Kältespeichervorrichtung gemäß Fig. 1 zugehörige Kühlbox;
- Fig. 5: eine Kühlladestation mit ausfahrbarer Ablageeinrichtung;
- Fig. 6: eine Kühlanlagenanordnung mit einer Mehrzahl von Kühlladestationen gemäß Fig. 5;
- Fig. 7: eine weitere Verwendungsform einer Kühlspeichervorrichtung gemäß Fig. 1 für einen Kühlschrank.

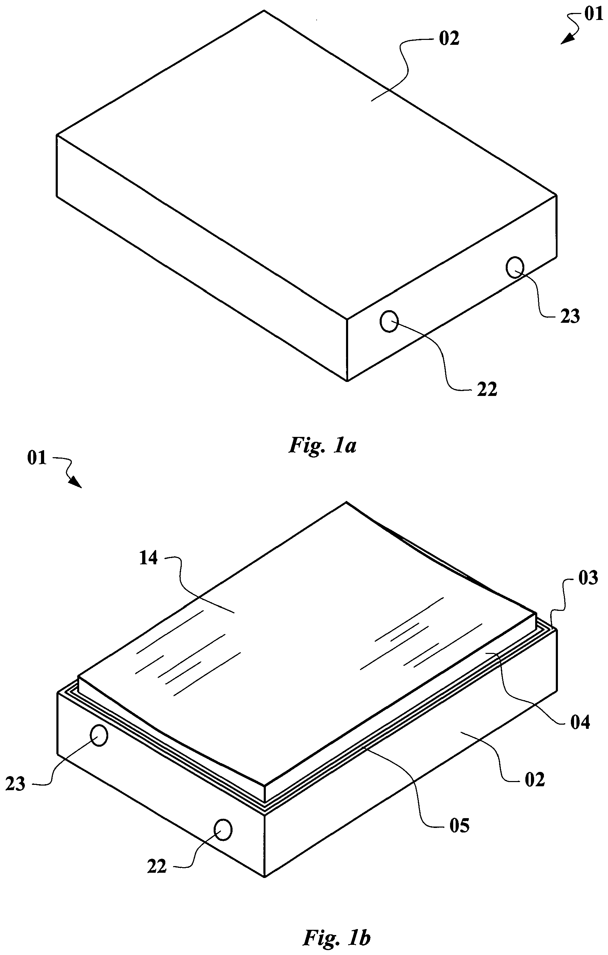

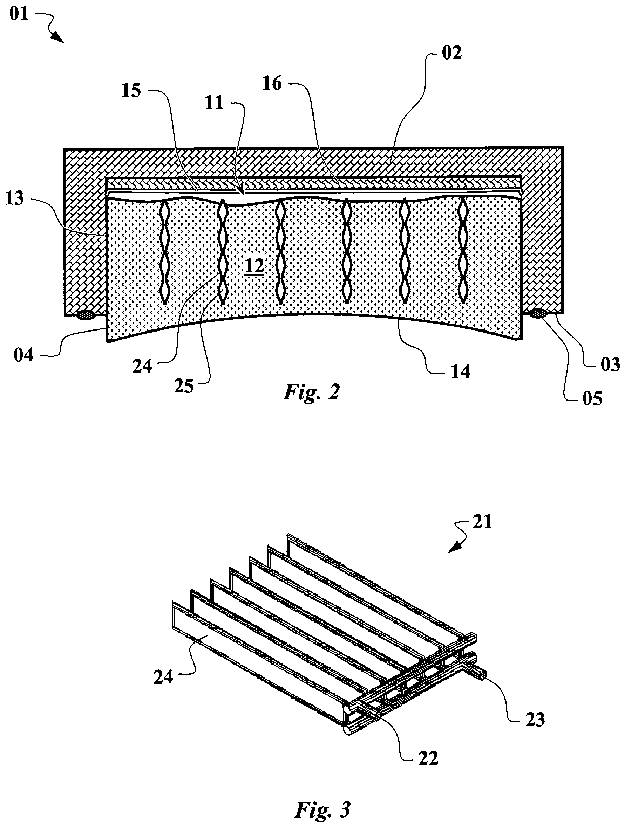

In der **Figur 1a** wird eine beispielhafte Kältespeichervorrichtung in Art eines Verschlussdeckels mit einer Ansicht von oben skizziert, während hingegen die **Figur 1b** selbiges mit einer Ansicht von unten zeigt. Bezüglich der zugehörigen Erläuterung sei weiterhin auf die **Figur 2** verwiesen, in welcher die Kältespeichervorrichtung 01 gemäß Fig. 1 im Schnitt skizziert wird.

Die Kältespeichervorrichtung 01 weist auf der nach außen weisenden Seite, d. h. auf der vom Lagervolumen 35 weg weisenden Seite eine umgebende Wärmedämmung 02 auf. Diese 02 dient hierbei zur Isolierung des Lagervolumens 35 sowie des Kältespeichermittels 12 gegenüber der Umwelt. Weiterhin weist die Kältespeichervorrichtung 01 in Art des Verschlussdeckels eine umlaufende Auflagefläche 03 mit integrierter Dichtung 05 auf, welche 03 die flächige dichte Auflage auf den zugehörigen Kühlbehälter 31 ermöglicht, so dass ein möglichst geringer Wärmeverlust im Bereich der Auflagefläche 03 erzielt wird. Die skizzierte Ausführungsform von Wärmedämmung 02 sowie Auflagefläche 03 und Dichtung 05 sind hinlänglich aus dem Stand der Technik bekannt, und insofern bedarf es diesbezüglich keiner weiteren Erläuterung.

In dieser völlig neuartigen Ausführungsform einer Kältespeichervorrichtung 01 weist diese beispielhafte Ausführung der Kältespeichervorrichtung 01 ein in einem Speicherraum 11 gespeichertes Kältespeichermittel 12 auf, wobei der Speicherraum 11 von einer flüssigkeitsdichten geschlossenen Speicherwandung 13 gebildet wird. Die Speicherwandung 13 wiederum umfasst hierbei einen zum Lagervolumen 35 weisenden Abschnitt 14, welcher 14 zugleich die kühlende Oberfläche beim Lagervolumen 35 bildet. Hierbei bildet somit der Abschnitt 14 der Speicherwandung 13 zugleich einen Teil der Außenwandung der Kältespeichervorrichtung 01.

Auf gegenüberliegender Seite wird in diesem Ausführungsbeispiel ein Abschnitt 15 der Speicherwandung 13 von einer elastischen Wandung gebildet. Hintergrund zur Wahl einer elastischen Wandung 15 ist es, dass das Kältespeichermittel 12 (je nach Medium, in der Regel) durch den Phasenübergang von flüssig zu fest eine Volumenausdehnung erfährt. Zur Verhinderung einer Beschädigung sowohl des im Speicherraum 11 befindlichen Wärmetauschers 21 als auch zur Verhinderung einer Beschädigung der Speicherwandung 13 wird oberseitig elastische Wandung 15 eingesetzt, welche 15 dem ansteigenden Druck beim Einfrieren nachgeben kann.

Zur Verhinderung einer Verformung der Außenseite der Kältespeichervorrichtung 01 kann weiterhin zwischen der Wärmedämmung 02 und der elastischen Wandung 15 ein elastischer Formkörper 16 eingebracht sein. Dieser 16 kann hierbei zugleich eine thermische Isolierung bewirken, wobei jedoch die notwendige Kompressibilität bei der Funktion als Ausgleichskörper bei Bewegung der elastischen Wandung 15 vorhanden sein muss. Insofern kann beispielsweise die Wärmedämmung 02 aus einem geschlossenenzelligen harten Kunststoffschaum hergestellt sein, während hingegen der elastische Formkörper 16 aus einem offenporigen weichen Schaum gebildet wird.

Weiterhin ist zu erkennen, dass das Kältespeichermittel 12 den Speicherraum 11 nicht vollständig ausfüllt, sondern vielmehr ein freies Restvolumen verbleibt. Dieses ist zum einen herstellungsbedingt vorhanden, da es beim Befüllen nicht in jedem Fall möglich ist, den Speicherraum vollständig mit Kältespeichermittel 12 zu füllen und nachfolgend dicht zu verschließen. Ebenso begünstigt ein restliches freies Volumen des Speicherraums 11 eine thermische Ausdehnung des Kältespeichermittels 12 ohne Beschädigung der Kältespeichervorrichtung 01.

Weiterhin zu erkennen ist, dass der zum Lagervolumen 35 weisende Abschnitt 14 der Speicherwandung 13 eine gewölbte, d. h. in diesem Ausführungsbeispiel konkave Form aufweist. Hierdurch wird bewirkt, dass die sich an der Oberfläche, d.h. dem Abschnitt 14 abkühlende Luft innerhalb des Lagervolumens 35 entlang der Oberfläche 14 nach außen hin abfällt und somit eine verbesserte Luftzirkulation im Lagervolumen 35 erreicht wird.

Weiterhin zu erkennen ist ansatzweise der im Speicherraum 11 vorhandene Wärmetauscher 21, welcher 21 hierzu ergänzend in der **Figur 3** skizziert wird. Dieser 21 umfasst hierbei eine Mehrzahl von parallel angeordneten flachen Wärmetauscherlamellen 24, welche 24 jeweils von Kühlmittelkanälen 25 durchzogen sind. Diese 24 sind hierbei einseitig jeweils untereinander verbunden und werden zu einem Kühlmitteleinlass 22 sowie einem Kühlmittelauslass 23 geführt. Somit wird eine Durchströmung des Wärmetauschers 21 mit Kühlmittel ermöglicht.

Zurückkommend auf die Fig. 1a und 1b erschließt sich die Anordnung vom Kühlmitteleinlass 22 sowie Kühlmittelauslass 23 an einer Stirnseite des rechteckigen flachen Verschlussdeckels 01. Hierbei ist der Kühlmitteleinlass 22 sowie der Kühlmittelauslass 23 in der Wärmedämmung 02 eingebettet und hiervon außer an der Stirnseite vollständig umgeben, so dass ein bündiger Abschluss ohne Überstand gegeben ist.

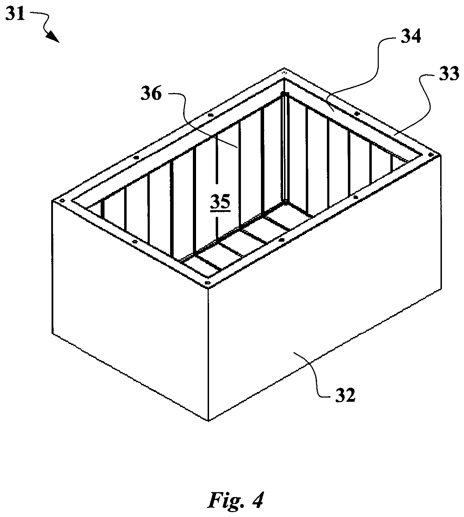

In der **Figur 4** wird ein zur Kältespeichervorrichtung 01 gehörender Kühlbehälter 31 skizziert. Zu erkennen ist, dass dieser - wie bei einer Kühlbox üblich - oberseitig offen mit einer Wärmedämmung 32 ausgeführt ist und hierbei das Lagervolumen 35 bildet. Die Auflage des Verschlussdeckels bzw. der Kältespeichervorrichtung 01 auf dem Kühlbehälter 31 erfolgt auf der Auflagefläche 33, wobei die Anlageflächen 34 als Absatz in der Wandung des Kühlbehälters 31 eine sichere Lage der Kältespeichervorrichtung 01 anhand dessen Anlageflächen 04 ermöglichen. Wesentlich ist, dass die Seitenwände des Kühlbehälters 31 eine unebene Gestalt 36 mit Erhebungen und Vertiefungen aufweisen. Durch diese im Wesentlichen senkrecht verlaufenden Erhebungen und Vertiefungen wird eine Luftzirkulation innerhalb des Lagervolumens 35 bei einer entsprechenden Füllung mit Lagergut begünstigt.

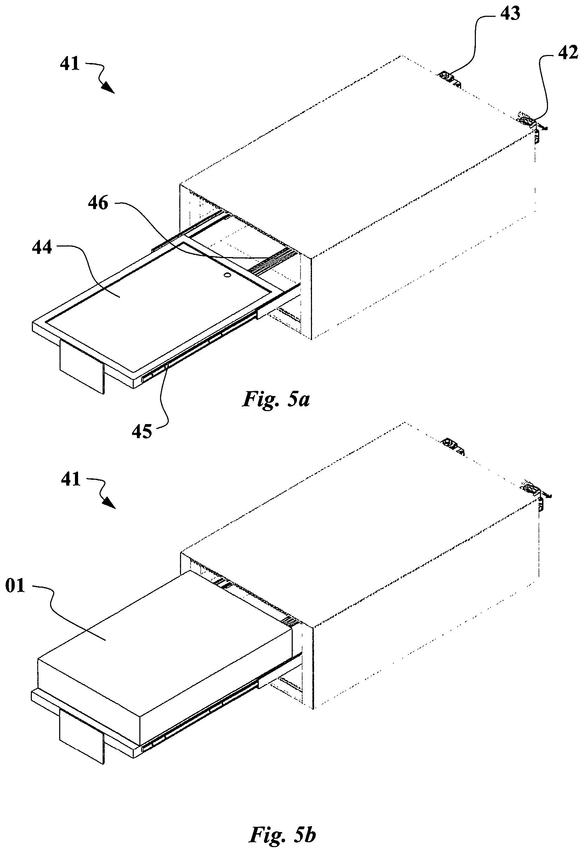

In der **Figur 5a** wird nunmehr eine einfachste Ausführungsform einer Kühlanlagenanordnung beispielhaft skizziert. Zu erkennen ist eine Kühlladestation 41, welche 41 boxartig ausgeführt ist und hierbei eine schubladenartig ausfahrbare Ablageeinrichtung 44 zur Aufnahme der Kältespeichervorrichtung 01 aufweist. Das Ein- und Ausfahren wird hierbei ermöglicht durch die Schubladenführung 45, wobei die eigentliche Bewegung von einem Schubladenantrieb 46 in Art eines Pneumatikzylinders realisiert wird. Rückseitig angeordnet befindet sich ein Einlassanschluss 42 sowie ein Auslassanschluss 43 jeweils zur Verbindung mit einer Ventilanordnung bzw. mit einer Kühlmittelquelle. Ergänzend hierzu skizziert die **Figur 5b** die Kühlladestation 41 mit auf der Ablageeinrichtung 44 aufliegender Kältespeichervorrichtung 01. Beim Einfahren der Kältespeichervorrichtung 01 wird aufgrund der schubladenartigen Ausführung sowie dem Vorhandensein des Schubladenantriebs 46 ein automatisches Verbinden des Kühlmitteleinlasses 22 mit dem Einlassanschluss 42 sowie des Kühlmittelauslasses 23 mit dem Auslassanschluss 43 bewirkt.

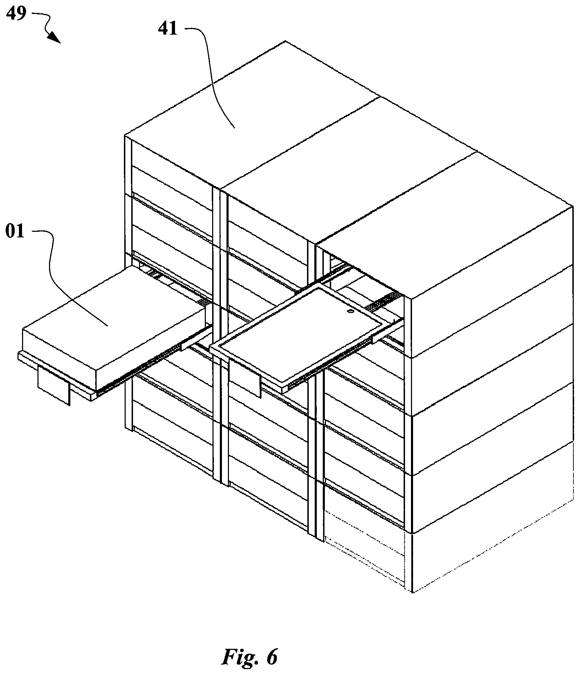

Die **Figur 6** zeigt eine Kühlanlagenanordnung mit einer Gruppe 49 von Kühlladestationen 41. Es ist offensichtlich, dass zur Erhöhung der Kapazität in einfacher Art und Weise die einzelnen Kühlladestationen 41 in Reihen und Spalten dem Grunde nach beliebig erweitert werden können, so dass die gewünschte Kapazität zum Kühlen von Kältespeichervorrichtungen 01 vorhanden ist.

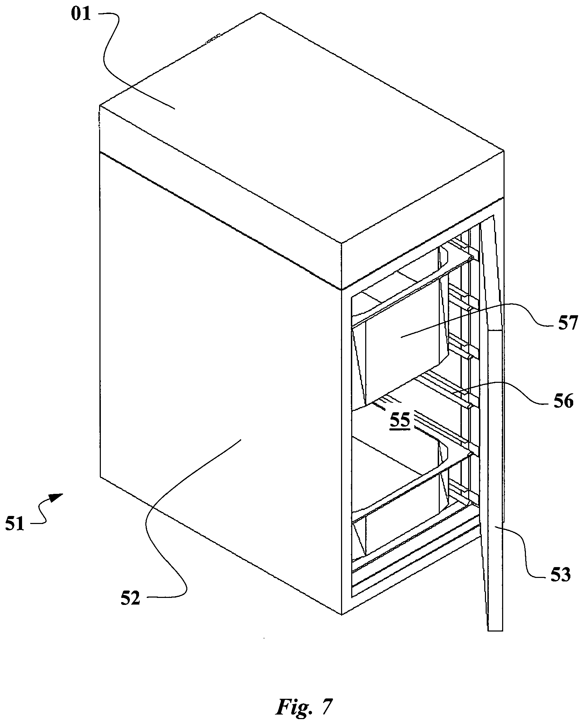

Die **Figur 7** skizziert eine weitere Verwendungsmöglichkeit für eine Kältespeichervorrichtung 01 in Art eines Verschlussdeckels. Hierbei ist anstelle des zuvor vorgesehenen Kühlbehälters 31 nunmehr eine Art Kühlschrank 51 skizziert. Dieser 51 umfasst naheliegend wiederum außenseitig eine Wärmedämmung 52 sowie abweichend von der Ausführung des Kühlbehälters 31 eine wärmegedämmte Schranktür 53. Innerhalb des hier skizzierten Kühlschranks 51 sind beispielhaft Lagerschienen 56 angeordnet, in denen jeweils hierzu gehörige Lagerschalen 57 eingeschoben werden können. Somit wird es beispielhaft ermöglicht, eine flexible Kühlung eines Kühlschranks 01 ohne Stromversorgung oder dergleichen zu ermöglichen. Weiterhin zeigt die Ausführung aus Fig. 7 die Möglichkeit auf, eine derartige Ausführungsform eines Kühlschranks 51 ebenso mit unterseitigen Rollen zu versehen und als kühlbare Servicestation einzusetzen.

## Patentansprüche

1. Kühlanlagenanordnung mit einer Kältemittelquelle, welche ein gekühltes flüssiges Kühlmittel bereit stellt, und mit einer Kältespeichervorrichtung (01) in Art eines Verschlussdeckels (01) zum Verschließen einer Öffnung eines transportablen ein Lagervolumen (35) aufweisenden Kühlbehälters (31), mit zumindest einem Speicherraum (11), welcher von einer flüssigkeitsdichten Speicherwandung (13) gebildet wird und zumindest teilweise mit einem bei Raumtemperatur flüssigen Kältespeichermittel (12) gefüllt ist, und mit einer Wärmedämmung (02), welche den Speicherraum (11) auf der vom Lagervolumen (35) wegweisenden Seite überdeckt, wobei die Speicherwandung (13) fester Bestandteil der Kältespeichervorrichtung (01) ist und an dieser ein Kühlmitteleinlass (22) und ein Kühlmittelauslass (23) angeordnet ist, wobei im oder am Speicherraum (11) ein von zumindest einem Kühlmittelkanal (25) durchzogener Wärmetauscher (21) angeordnet ist, wobei Kühlmittel vom Kühlmitteleinlass (22) kommend durch den Wärmetauscher (21) zum Kühlmittelauslass (23) strömen und hierbei dem Kältespeichermittel (12) Wärme entziehen und/oder ein Einfrieren des Kältespeichermittels (12) bewirken können, **dadurch gekennzeichnet, dass** die Kühlanlagenanordnung weiter zumindest eine Kühlladestation (41) beinhaltet, welche die Kältespeichervorrichtung (01) aufnehmen kann, wobei die Kühlladestation (41) einen zum Kühlmitteleinlass (22) komplementären Einlassanschluss (42) und einen zum Kühlmittelauslass (23) komplementären Auslassanschluss (43) aufweist, wodurch Kühlmittel von der Kältemittelquelle kommend die Kältespeichervorrichtung (01) durchfließen kann.

2. Kühlanlagenanordnung nach Anspruch 1,
**dadurch gekennzeichnet,**
**dass** das Kühlmittel eine Sole, insbesondere eine Salzsole, ist.

3. Kühlanlagenanordnung nach Anspruch 1 oder 2,
**dadurch gekennzeichnet,**
**dass** die Kältespeichervorrichtung (01) in die Kühlladestation (41) schubladenartig eingefahren und zuvor/zugleich/nachfolgend darin abgelegt werden kann, wobei insbesondere mit dem Einfahren eine Kühlmittel führende Verbindung zwischen dem Einlassanschluss (42) und dem Kühlmitteleinlass (22) und zwischen dem Auslassanschluss (43) und dem Kühlmittelauslass (23) hergestellt wird.

4. Kühlanlagenanordnung nach einem der Ansprüche 1 bis 3,
**dadurch gekennzeichnet,**
**dass** die Kühlladestation (41) einen Schubladenantrieb (46), insbesondere einen Hydraulik- oder Pneumatikzylinder, zum Aus- und Einfahren einer Ablageeinrichtung (44) zur Aufnahme der Kältespeichervorrichtung (01) umfasst.

5. Kühlanlagenanordnung nach einem der Ansprüche 1 bis 4,
**dadurch gekennzeichnet,**
**dass** die Kühlladestation (41) zumindest ein Arretierungsmittel umfasst, welches die Kältespeichervorrichtung (01) derart in der Kühlladestation (41) hält, dass ein Kältemittelverlust zwischen Einlassanschluss (42) und dem Kühlmitteleinlass (22) und zwischen dem Auslassanschluss (43) und dem Kühlmittelauslass (23) verhindert wird.

6. Kühlanlagenanordnung nach einem der Ansprüche 1 bis 5,
**dadurch gekennzeichnet,**
**dass** die Kühlladestation (41) zumindest eine vordere Ladeklappe umfasst, welche zum Beladen mit einer Kältespeichervorrichtung (01) geöffnet wird, so dass eine taubgeschützte, insbesondere wärmegedämmte, Lagerung einer Kältespeichervorrichtung (01) in der Kühlladestation (41) gewährleistet ist.

7. Kühlanlagenanordnung nach einem der Ansprüche 1 bis 6,
**gekennzeichnet durch**
eine Ventilanordnung, an welcher die Kühlmittelquelle und der Einlassanschluss (42) und der Auslassanschluss (43) und weiterhin eine Druckluftversorgung angeschlossen sind, wobei eine Schaltung der Ventilanordnung derart möglich ist, dass die Verbindung von der Kühlmittelquelle zum Einlassanschluss (42) unterbunden und eine Verbindung von der Druckluftversorgung zum Einlassanschluss (42) hergestellt werden kann, so dass dem Kühlmittel nachfolgend Druckluft durch den Wärmetauscher (21) zum Austreiben des Kühlmittels strömen kann.

8. Kühlanlagenanordnung nach einem der Ansprüche 1 bis 7,
**gekennzeichnet durch**
eine Mehrzahl (49) nebeneinander und übereinander angeordneter Kühlladestationen (41) und einer Handlingsvorrichtung, wobei eine zugeführte Kältespeichervorrichtung (01) von der Handlingsvorrichtung übernommen und in eine freie Kühlladestationen (41) eingeladen werden kann, et vice versa.

9. Kühlanlagenanordnung nach einem der Ansprüche 1 bis 8,
**gekennzeichnet durch**,
ein Temperaturüberwachungssystem, welches die gemessenen Temperaturdaten von in Verwendung befindlichen Kältespeichervorrichtungen (01) empfängt und auswertet und bei einem Unterschreiten einer allgemeinen und/oder für den Lagerungszweck individuellen Grenztemperatur einen Austausch der erwärmten Kältespeichervorrichtung (01) gegen eine gekühlte Kältespeichervorrichtung (01) veranlasst.

10. Kühlanlagenanordnung nach Anspruch 9,
**dadurch gekennzeichnet,**
**dass** der Austausch von einem automatisch gesteuerten Transportsystem vorgenommen wird, wobei ein Kühlbehälter (31) mit erwärmter Kältespeichervorrichtung (01) vom Lagerort zu den Kühlladestationen (49) verbracht wird und 15 ein Austausch der Kältespeichervorrichtung (01) und nachfolgend ein Rücktransport des Kühlbehälters (31) mit gekühlter Kältespeichervorrichtung (01) zum Lagerort erfolgt und/oder ein Transport einer gekühlten Kältespeichervorrichtung (01) von den Kühlladestationen (49) zum Lagerort der erwärmten Kältespeichervorrichtung (01) und ein Austausch und nachfolgend ein Rücktransport der erwärmten Kältespeichervorrichtung (01) zu den Kühlladestationen (49) erfolgt.

11. Kühlanlagenanordnung nach einem der Ansprüche 1 bis 10,
**dadurch gekennzeichnet,**
**dass** das Kältespeichermittel (12) Wasser und/oder ein wässriges Fluid und/oder ein Eutektikum ist.

12. Kühlanlagenanordnung nach einem der Ansprüche 1 bis 11,
**dadurch gekennzeichnet,**
**dass** der Kühlmitteleinlass (22) und der Kühlmittelauslass (23) von einer Schnellverschlusskupplung gebildet werden, welche insbesondere an einer schmalen Stirnseite der Kältespeichervorrichtung in Art eines flachen rechteckigen Verschlussdeckels (01) angeordnet sind.

13. Kühlanlagenanordnung nach einem der Ansprüche 1 bis 12,
**dadurch gekennzeichnet,**
**dass** der Wärmetauscher (21) zumindest eine Wärmetauscherlamelle (24) mit einer plattenförmigen Gestalt aufweist, wobei insbesondere mehrere Wärmetauscherlamellen (24) im Wesentlichen parallel zueinander und im Wesentlichen senkrecht zur Erstreckung der Kältespeichervorrichtung in Art eines flachen rechteckigen Verschlussdeckels (01) ausgerichtet sind.

14. Kühlanlagenanordnung nach einem der Ansprüche 1 bis 13,
**dadurch gekennzeichnet,**
**dass** zumindest ein Temperatursensor den Zustand des Kältespeichermittels (12) und/oder zumindest ein Temperatursensor eine Lufttemperatur oder eine Wandtemperatur auf der zum Lagervolumen (35) weisenden Seite der Kältespeichervorrichtung (01) überwachen kann, wobei insbesondere der Messwert des Temperatursensors drahtlos an einen externen Empfänger übertragen werden kann.

15. Kühlanlagenanordnung nach einem der Ansprüche 1 bis 14,
**dadurch gekennzeichnet,**
**dass** der Kühlbehälter oder ein zur Kältespeichervorrichtung in Art eines Verschlussdeckels gehörender Kühlbehälter (31) zumindest abschnittsweise auf der zum Lagervolumen (35) weisenden Seite eine unebene Gestalt (36) mit Erhöhungen und Vertiefungen aufweist, wobei sich insbesondere in den Seitenwänden die Erhöhungen und Vertiefungen in senkrechter Richtung erstrecken, wodurch eine Kaltluftzirkulation im Lagervolumen (3 5) begünstigt wird.

16. Kühlanlagenanordnung nach einem der Ansprüche 1 bis 15,
**dadurch gekennzeichnet,**
**dass** der Verschlussdeckel (01) zusammen mit einem zugehörenden Kühlbehälter (31) hinsichtlich Lagerung und Transport kompatibel zu einer sogenannten Eurobox ausgeführt ist, und insbesondere die Abmessung 40x30 cm mit einer Höhe zwischen 20 cm und 35 cm oder die Abmessung 60x40 cm mit einer Höhe zwischen 20 cm und 45 cm oder die Abmessung 80x60 cm mit einer Höhe zwischen 30 cm und 45 cm aufweist.

## Claims

1. Cooling system arrangement comprising a coolant source which provides a cooled liquid coolant, and comprising a cold reservoir device (01) in the manner of a closing cover (01) for closing an opening of a transportable cooling container (31) having a storage volume (35), comprising at least one reservoir chamber (11) which is formed by a liquid-tight reservoir wall (13) and is at least partly filled with a refrigerant (12) that is liquid at room temperature, and having thermal insulation (02) which covers the reservoir chamber (11) on the side facing away from the storage volume (35), wherein the reservoir wall (13) is a fixed part of the cold reservoir device (01) and a coolant inlet (22) and a coolant outlet (23) are arranged thereon, wherein a heat exchanger (21) through which at least one coolant channel (25) passes is arranged in or on the reservoir chamber (11), wherein coolants coming from the coolant inlet (22) flow through the heat exchanger (21) to the coolant outlet (23) and in the process can withdraw heat from the refrigerant (12) and/or effect freezing of the refrigerant (12),
**characterized in that**
the cooling system arrangement also contains a coolant charging station (41), which can accommodate the cold reservoir device (01), wherein the coolant charging station (41) has an inlet connection (42) complementary to the coolant inlet (22) and an outlet connection (43) complementary to the coolant outlet (23), through which coolant coming from the coolant source can flow through the cold reservoir device (01).

2. Cooling system arrangement according to Claim 1,
**characterized in that**
the coolant is a brine, in particular a salt brine.

3. Cooling system arrangement according to Claim 1 or 2,
**characterized in that**
the cold reservoir device (01) can be inserted into the coolant charging station (41) in the manner of a drawer and can previously/simultaneously/subsequently be deposited therein, wherein, in particular with the insertion, a connection carrying coolant is produced between the inlet connection (42) and the coolant inlet (22) and between the outlet connection (43) and the coolant outlet (23).

4. Cooling system arrangement according to one of Claims 1 to 3,
**characterized in that**
the coolant charging station (41) comprises a drawer drive (46), in particular a hydraulic or pneumatic cylinder, for driving out and in a deposition device (44) for accommodating the cold reservoir device (01).

5. Cooling system arrangement according to one of Claims 1 to 4,
**characterized in that**
the coolant charging station (41) comprises at least one locking means, which holds the cold reservoir device (01) in the coolant charging station (41) in such a way that a loss of coolant between the inlet connection (42) and the coolant inlet (22) and between the outlet connection (43) and the coolant outlet (23) is prevented.

6. Cooling system arrangement according to one of Claims 1 to 5,
**characterized in that**
the coolant charging station (41) comprises at least one front charging flap, which is opened for loading with a cold reservoir device (01), so that dust-protected, in particular thermally insulated, storage of the cold reservoir device (01) in the coolant charging station (41) is ensured.

7. Cooling system arrangement according to one of Claims 1 to 6,
**characterized by**
a valve arrangement, to which the coolant source and the inlet connection (42) and the outlet connection (43) and also a compressed air supply are connected, wherein it is possible to connect the valve arrangement in such a way that the connection from the coolant source to the inlet connection (42) can be suppressed and a connection from the compressed air supply to the inlet connection (42) can be produced, so that compressed air following the coolant can flow through the heat exchanger (21) in order to drive out the coolant.

8. Cooling system arrangement according to one of Claims 1 to 7,
**characterized by**
a plurality (49) of coolant charging stations (41) arranged beside one another and above one another, and a handling device, wherein a cold reservoir device (01) that is supplied can be accepted by the handling device and loaded into a free coolant charging station (41), and vice versa.

9. Cooling system arrangement according to one of Claims 1 to 8,
**characterized by**
a temperature monitoring system, which receives and evaluates the measured temperature data from cold reservoir devices (01) that are in use and, if the said temperature falls below a limiting temperature that is general and/or individual to the storage purpose, causes the heated cold reservoir device (01) to be replaced by a cooled cold reservoir device (01).

10. Cooling system arrangement according to Claim 9, **characterized in that**
the replacement is performed by an automatically controlled transport system, wherein a cooling container (31) with heated cold reservoir device (01) is moved from the storage location to the coolant charging stations (49), and 15 replacement of the cold reservoir device (01) and then transport of the cooling container (31) with the cooled cold reservoir device (01) back to the storage location are carried out, and/or transport of a cooled cold reservoir device (01) from the coolant charging stations (49) to the storage location of the heated cold reservoir device (01), and replacement and then transport of the heated cold reservoir device (01) back to the coolant charging stations (49) are carried out.

11. Cooling system arrangement according to one of Claims 1 to 10,
**characterized in that**
the refrigerant (12) is water and/or an aqueous fluid and/or a eutectic.

12. Cooling system arrangement according to one of Claims 1 to 11,
**characterized in that**
the coolant inlet (22) and the coolant outlet (23) are formed by a quick-release coupling which, in particular, are arranged on a narrow front side of the cold reservoir device in the manner of a flat rectangular closing cover (01).

13. Cooling system arrangement according to one of Claims 1 to 12,
**characterized in that**
the heat exchanger (21) has at least one heat exchanger slat (24) with a plate-like shape, wherein in particular multiple heat exchanger slats (24) are oriented substantially parallel to one another and substantially perpendicular to the extent of the cold reservoir device in the manner of a flat rectangular closing cover (01).

14. Cooling system arrangement according to one of Claims 1 to 13,
**characterized in that**
at least one temperature sensor is able to monitor the condition of the refrigerant (12), and/or at least one temperature sensor is able to monitor an air temperature or a wall temperature on the side of the cold reservoir device (01) that faces the storage volume (35), wherein in particular the measured value from the temperature sensor can be transmitted wirelessly to an external receiver.

15. Cooling system arrangement according to one of Claims 1 to 14,
**characterized in that**
the cooling container or a cooling container (31) belonging to the cold reservoir device in the manner of a closing cover has an uneven shape (36) with elevations and depressions on at least some sections of the side facing the storage volume (35), wherein, in particular in the side walls, the elevations and depressions extend in the vertical direction, by which means cold air circulation in the storage volume (35) is encouraged.

16. Cooling system arrangement according to one of Claims 1 to 15,
**characterized in that**
the closing cover (01), together with an associated cooling container (31), is implemented so as to be compatible with regard to storage and transport with a so-called Eurobox and, in particular, has the dimension 40 x 30 cm with a height between 20 cm and 35 cm, or the dimension 60 x 40 cm with a height between 20 cm and 45 cm, or the dimension 80 x 60 cm with a height between 30 cm and 45 cm.

## Revendications

1. Ensemble d'installation frigorifique avec une source d'agent réfrigérant, qui fournit un agent frigorifique liquide refroidi, et avec un dispositif d'accumulation de froid (01) à la manière d'un couvercle de fermeture (01) pour fermer l'ouverture d'un réservoir frigorifique transportable (31) présentant un volume de stockage (35), avec au moins une chambre d'accumulation (11), qui est formée par une paroi d'accumulation étanche au liquide (13) et qui est remplie au moins en partie avec un agent d'accumulation de froid (12) liquide à la température ambiante, et avec une isolation thermique (02), qui recouvre la chambre d'accumulation (11) sur le côté situé à l'opposé du volume de stockage (35), dans lequel la paroi d'accumulation (13) est un composant solide du dispositif d'accumulation de froid (01) et une entrée d'agent frigorifique (22) et une sortie d'agent frigorifique (23) sont disposées dans celle-ci, dans lequel un échangeur de chaleur (21) traversé par au moins un canal d'agent frigorifique (25) est disposé dans ou sur la chambre d'accumulation (11), dans lequel des agents frigorifiques venant de l'entrée d'agent frigorifique (22) peuvent s'écouler à travers l'échangeur de chaleur (21) vers la sortie d'agent frigorifique (23) et soutirer de ce fait de la chaleur de l'agent d'accumulation de froid (12) et/ou provoquer une congélation de l'agent d'accumulation de froid (12), **caractérisé en ce que** l'ensemble d'installation frigorifique comporte en outre au moins une station de charge frigorifique (41), qui peut contenir le dispositif d'accumulation de froid (01), dans lequel la station de charge frigorifique (41) présente un raccord d'entrée (42) complémentaire à l'entrée d'agent frigorifique (22) et un raccord de sortie (43) complémentaire à la sortie d'agent frigorifique (23), à travers lesquels l'agent frigorifique venant de la source d'agent réfrigérant peut circuler à travers le dispositif d'accumulation de froid (01).

2. Ensemble d'installation frigorifique selon la revendication 1, **caractérisé en ce que** l'agent réfrigérant est un sol, en particulier un sol salin.

3. Ensemble d'installation frigorifique selon la revendication 1 ou 2, **caractérisé en ce que** le dispositif d'accumulation de froid (01) est introduit à la manière d'un tiroir dans la station de charge frigorifique (41) et peut y être déposé préalablement/ simultanément/postérieurement, dans lequel, en particulier lors de l'introduction, il s'établit une liaison conductrice d'agent frigorifique entre le raccord d'entrée (42) et l'entrée d'agent frigorifique (22) et entre le raccord de sortie (43) et la sortie d'agent frigorifique (23).

4. Ensemble d'installation frigorifique selon l'une quelconque des revendications 1 à 3, **caractérisé en ce que** la station de charge frigorifique (41) comprend un entraînement de tiroir (46), en particulier un cylindre hydraulique ou pneumatique, pour l'extraction et l'introduction d'un dispositif de dépôt (44) destiné à recevoir le dispositif d'accumulation de froid (01).

5. Ensemble d'installation frigorifique selon l'une quelconque des revendications 1 à 4, **caractérisé en ce que** la station de charge frigorifique (41) comprend au moins un moyen d'arrêt, qui maintient le dispositif d'accumulation de froid (01) dans la station de charge frigorifique (41) d'une manière telle qu'une perte d'agent réfrigérant entre le raccord d'entrée (42) et l'entrée d'agent frigorifique (22) et entre le raccord de sortie (43) et la sortie d'agent frigorifique (23) soit empêchée.

6. Ensemble d'installation frigorifique selon l'une quelconque des revendications 1 à 5, **caractérisé en ce que** la station de charge frigorifique (41) comprend au moins un clapet de charge avant, qui est ouvert pour le chargement avec un dispositif d'accumulation de froid (01), de telle manière qu'un stockage à l'abri des poussières, en particulier thermiquement isolé, d'un dispositif d'accumulation de froid (01) dans la station de charge frigorifique (41) soit garanti.

7. Ensemble d'installation frigorifique selon l'une quelconque des revendications 1 à 6, **caractérisé par** un agencement de soupape, auquel la source d'agent frigorifique et le raccord d'entrée (42) et le raccord de sortie (43) et en outre une alimentation en air comprimé sont raccordés, dans lequel une commutation de l'agencement de soupape est possible, de telle manière que la liaison de la source d'agent frigorifique avec le raccord d'entrée (42) soit interrompue et qu'une liaison de l'alimentation en air comprimé avec le raccord d'entrée (42) puisse être établie, de telle manière qu'après l'agent frigorifique de l'air comprimé puisse circuler à travers l'échangeur de chaleur (21) pour l'élimination de l'agent frigorifique.

8. Ensemble d'installation frigorifique selon l'une quelconque des revendications 1 à 7, **caractérisé par** une multiplicité (49) de stations de charge frigorifique (41) disposées l'une à côté de l'autre et l'une au-dessus de l'autre et d'un dispositif de manipulation, dans lequel un dispositif d'accumulation de froid introduit (01) peut être repris par le dispositif de manipulation et chargé dans une station de charge frigorifique (41), et vice versa.

9. Ensemble d'installation frigorifique selon l'une quelconque des revendications 1 à 8, **caractérisé par** un système de surveillance de la température, qui reçoit et évalue les données de température mesurées de dispositifs d'accumulation de froid (01) en cours d'utilisation et en cas de baisse en dessous d'une température limite générale et/ou individuelle pour l'application de stockage commande un échange du dispositif d'accumulation de froid échauffé (01) contre un dispositif d'accumulation de froid refroidi (01).

10. Ensemble d'installation frigorifique selon la revendication 9, **caractérisé en ce que**
l'échange est opéré par un système de transport à commande automatique, dans lequel un récipient frigorifique (31) avec le dispositif d'accumulation de froid échauffé (01) est amené de l'endroit de stockage aux stations de charge frigorifique (49) et 15 on effectue un échange du dispositif d'accumulation de froid (01) et ensuite on effectue un retour du récipient frigorifique (31) avec le dispositif d'accumulation de froid refroidi (01) à l'endroit de stockage et/ou on effectue un transport d'un dispositif d'accumulation de froid refroidi (01) des stations de charge frigorifique (49) à l'endroit de stockage du dispositif d'accumulation de froid échauffé (01) et un échange et ensuite un retour du dispositif d'accumulation de froid échauffé (01) aux stations de charge frigorifique (49).

11. Ensemble d'installation frigorifique selon l'une quelconque des revendications 1 à 10, **caractérisé en ce que** l'agent d'accumulation de froid (12) est l'eau et/ou un fluide aqueux et/ou un eutectique.

12. Ensemble d'installation frigorifique selon l'une quelconque des revendications 1 à 11, **caractérisé en ce que** l'entrée d'agent frigorifique (22) et la sortie d'agent frigorifique (23) sont formées par des raccords à couplage rapide, qui sont disposés en particulier sur un côté frontal étroit du dispositif d'accumulation de froid à la manière d'un couvercle de fermeture rectangulaire plat (01).

13. Ensemble d'installation frigorifique selon l'une quelconque des revendications 1 à 12, **caractérisé en ce que** l'échangeur de chaleur (21) présente au moins une lamelle d'échangeur de chaleur (24) en forme de plaque, dans lequel en particulier plusieurs lamelles d'échangeur de chaleur (24) sont orientées essentiellement parallèlement les unes aux autres et essentiellement perpendiculairement à l'extension du dispositif d'accumulation de froid à la manière d'un couvercle de fermeture rectangulaire plat (01).

14. Ensemble d'installation frigorifique selon l'une quelconque des revendications 1 à 13, **caractérisé en ce qu'**au moins un détecteur de température peut surveiller l'état de l'agent d'accumulation de froid (12) et/ou au moins un détecteur de température peut surveiller une température d'air ou une température de paroi sur le côté du dispositif d'accumulation de froid (01) tourné vers le volume de stockage (35), dans lequel en particulier la valeur de mesure du détecteur de température peut être transmise sans fil à un récepteur externe.

15. Ensemble d'installation frigorifique selon l'une quelconque des revendications 1 à 14, **caractérisé en ce que** le récipient frigorifique ou un récipient frigorifique (31) faisant partie du dispositif d'accumulation de froid à la manière d'un couvercle de fermeture présente au moins en partie sur le côté tourné vers le volume de stockage (35) une forme inégale (36) avec des bosses et des creux, dans lequel les bosses et les creux s'étendent en direction verticale en particulier dans les parois latérales, favorisant ainsi la circulation d'air froid dans le volume de stockage (35).

16. Ensemble d'installation frigorifique selon l'une quelconque des revendications 1 à 15, **caractérisé en ce que** le couvercle de fermeture (01) avec le récipient frigorifique correspondant (31) est réalisé, en ce qui concerne le stockage et le transport, sous forme compatible avec une Eurobox, et en particulier présente les dimensions 40x30cm avec une hauteur comprise entre 20 cm et 35 cm ou les dimensions 60x40 cm avec une hauteur comprise entre 20 cm et 45 cm ou les dimensions 80x60 cm avec une hauteur comprise entre 30 cm et 45 cm.
